Europäisches Patentamt

European Patent Office

Office européen des brevets

(11) Publication number: **0 457 053 A2**

# EUROPEAN PATENT APPLICATION

(21) Application number: **91106307.1**

(22) Date of filing: **19.04.91**

(51) Int. Cl.⁵: **H04N 7/14**

(30) Priority: **15.05.90 IT 4160290**

(43) Date of publication of application:
**21.11.91 Bulletin 91/47**

(84) Designated Contracting States:
**DE ES FR GB**

(71) Applicant: **B.P.T. S.p.A.**
**Via Roma, 41**
**I-30020 Cinto Caomaggiore (Venezia)(IT)**

(72) Inventor: **Vit, Luigi**
**Via Genova, 6**
**I-30020 Cinto Caomaggiore, Venezia(IT)**

(74) Representative: **Cantaluppi, Stefano et al**
**c/o Jacobacci-Casetta & Perani S.p.A. Via**
**Berchet 9**
**I-35131 Padova(IT)**

(54) A video intercommunication system.

㉟ A video intercommunication system comprising at least one local and one remote unit (A,B), wherein each unit is equipped with a picture tube (1) and a TV camera (2) mounted side-by-side.

The TV camera is carried on a support (10,12) which allows it to be directed toward the object to be imaged through angular movements thereof imparted by a control (13) operable from the unit exterior.

Each unit is further provided with a switch (16), connected in the video signal circuit of the picture tube and operable from outside by means of a pushbutton (18) to temporarily link the TV camera of one unit with its picture tube as well, and then switch it over to just the circuit leading to the picture tube of the remote unit connected thereto.

With this system, the object seen by the TV camera can be position set as desired, and the local shooting thereof can be checked as the signal is being transmitted to the remote unit.

A particular application of this system relates to communication with deaf people and the transmission of details of a document or a written message.

Fig. 1

This invention relates to a video intercommunication system comprising at least one local unit and one remote unit connected to each other, each unit being provided, on its operation front, with a picture tube and a TV camera, mounted side-by-side.

Systems of the kind outlined above have been known and used in particular for closed-circuit interphone systems within a building, between its main entrance door and individual apartments, or in association with conventional telephone circuits, possibly of the switched type.

It is found, however, that such systems have a disadvantage in that one cannot realize locally exactly what framing of the subject is being received by the remote unit, and vice versa.

That problem, which could be solved at least in part by the exchange of appropriate instructions between the interlocutors on the sound circuit, grows to be quite serious where one of the system users has a damaged hearing or speech faculty or happens, what is worse, to be deaf-and-dumb.

As is known, with people having a damaged hearing faculty, communication takes place mainly by a gestural language and/or by letting them see the lips movements or have a written message.

Under such circumstances, therefore, it becomes important that each remotely located interlocutor be enabled to control locally the frame to be imaged on the remote unit at the other interlocutor location.

Accordingly, the system of this invention is directed to obviate the above-noted disadvantage with which prior video intercommunication systems are beset.

This object is achieved by a system as set forth in the characterizing parts of the appended claims.

The invention will be now described in detail with reference to an embodiment thereof, shown by way of illustration and not of limitation in the accompanying drawings, wherein:

Figure 1 is a perspective view showing schematically one of the units comprising this system;

Figure 2 illustrates schematically the framing control operation for the object being shot on the local unit; and

Figure 3 illustrates schematically the imaging operation on the remote unit of the object being shot by locally controlled framing.

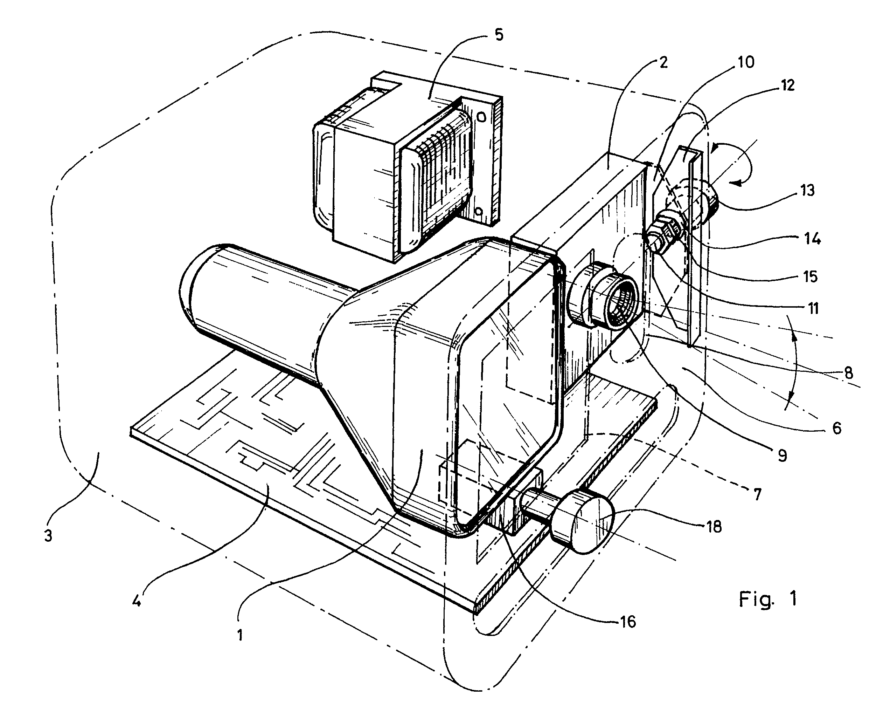

With reference to Figure 1 of the drawings, it may be seen that each unit comprises a picture tube 1 and a TV camera 2 accommodated within a cabinet 3 which supports and encloses all their functional parts, including a circuit board 4 and a power supply transformer 5. These parts will not be described in detail because conventional and unessential to making the invention understood.

The operation front wall 6 of the cabinet 1 has a window 7 formed at the picture tube 1 location, and an elongate aperture 8 at the location of the objective lens 9 of the TV camera 2.

The latter is supported on a bracket 10 fixedly attached to a shaft 11 which is engaged rotatably in another bracket 12 conventionally secured on the unit cabinet 3.

The shaft 11 extends out of the side wall of the cabinet 3 and is terminated with a knob 13 whereby it can be controlled to perform angular movements about its axis which lies, in the example shown, along a perpendicular direction to the axis of the objective lens 9 of the TV camera 2.

A friction member 14, being compressed by nuts 15 against the fixed bracket 12, allows the TV camera 2 to be displaced angularly while holding it at any position setting without the assistance from additional locking arrangements.

The unit is further provided with a switch, indicated at 16, which is operable through a pushbutton 18 accessible on the operation front 6 of the cabinet 3, in a manner to be described.

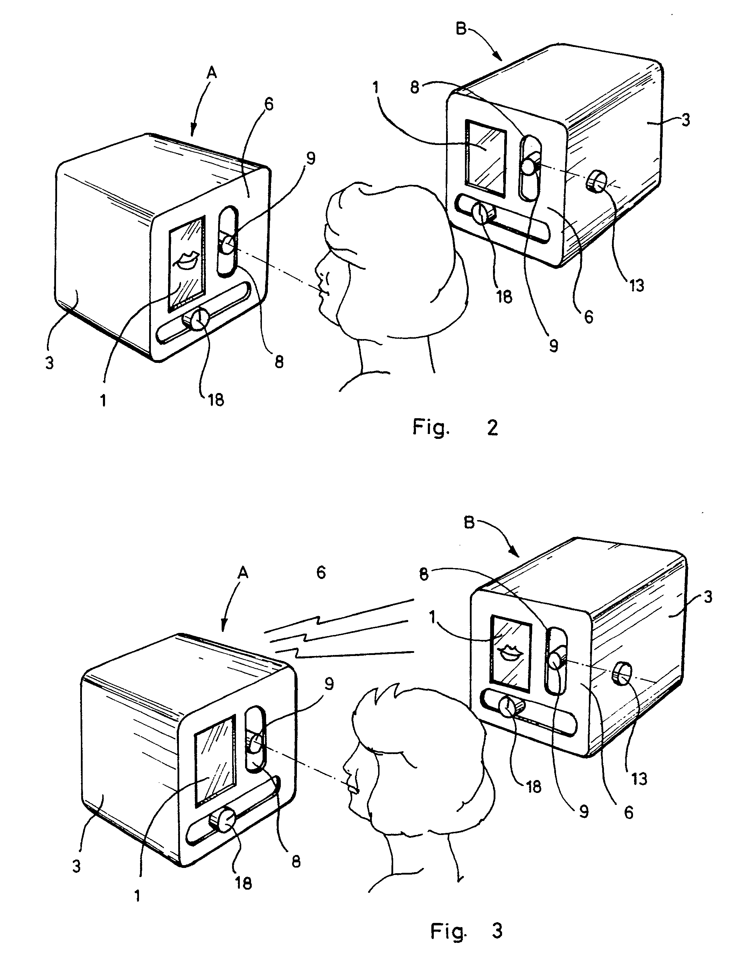

The operation of this system can be appreciated by having reference to Figures 2 and 3, showing for convenience of illustration two interconnected units only like those just described. Indicated at A is the unit which is regarded to be the local one, and at B the unit regarded to be the remote one.

Assuming that either a written message or the movements of the lips are to be framed of a person who, standing in front of the local unit A wants to communicate, e.g. with no sound assistance, with another person standing at the remote terminal B, the angular setting of the objective lens of the TV camera 2 can be adjusted by manipulation of the knob 13.

The frame is then checked directly on the picture tube 1 of the local unit A itself while holding the pushbutton 18 depressed which will act, as mentioned hereinabove, on the switch 16. This switch enables the TV camera 2 to be temporarily linked to the picture tube of the unit belonging to the TV camera, and preferably linked to the picture tube of the remote unit as well.

Once this check has been made, if the framing is found to be satisfactory, the pushbutton 18 is released, thereby the TV camera 2 of the local unit A is only linked with the picture tube 1 of the remote unit B, on which the desired picture will be displayed.

Although unnecessary to secure the invention objects, this system may include a sound circuit to make it adaptable for any viable applications.

The dimensions and materials may be any selected ones to meet individual demands without departing from the scope of the invention as described in the foregoing and claimed herein below.

## Claims

1. A video intercommunication system comprising at least one local unit and one remote unit (A,B) connected to each other, each unit being provided, on its operation front, with a picture tube (1) and a TV camera (2), mounted side-by-side, characterized in that each unit includes a switch (16) connected in the video signal circuit between the picture tube (1) and the TV camera (2), and a control (18) actuatable from the unit exterior to operate the switch between a first position thereof where it establishes a circuit link between the TV camera (2) and the picture tube (1) of that same unit (A,B), and a second position where it establishes a link between the TV camera (2) of said unit (A,B) and the picture tube (1) of the other unit (B,A) connected thereto, and vice versa.

2. A system according to Claim 1, characterized in that the TV camera (2) of each unit is mounted on a support (10,12) whose orientation can be set by means of a control (13) actuatable from the unit exterior.

3. A system according to Claim 2, characterized in that said said TV camera support (10) with adjustable orientation features is mounted on the end of a stub shaft (11) carried rotatably on a member (12) attached to the unit frame structure, the other end of the stub shaft (11) extending out of said unit and being provided with a control knob (13).

4. A system according to Claim 3, characterized in that a friction element (14) is fitted between said stub shaft and its support.

5. A system according to Claim 4, characterized in that the longitudinal axis of said stub shaft (11) lies perpendicularly to the TV camera (2) optical shooting axis.

6. A system according to the preceding claims, characterized in that it includes a sound circuit.

7. A system according to one or more of the preceding claims, characterized in that said switch (16), when set to said first position, establishes a circuit link between the TV camera (2) of one unit and both picture tubes (1) of said local and remote units (A,B).

Fig. 1

Fig. 2

Fig. 3